# EUROPÄISCHE PATENTSCHRIFT

(11) **EP 3 755 567 B1**
(45) Veröffentlichungstag und Bekanntmachung des Hinweises auf die Patenterteilung: **22.12.2021**
(21) Anmeldenummer: 19704748.3
(22) Anmeldetag: 01.02.2019
(51) Int. Cl.: B60K 37/06, B60K 35/00

(54) **BEDIENVORRICHTUNG SOWIE VERFAHREN ZUM ANSTEUERN ZUMINDEST EINER FUNKTIONSEINHEIT FÜR EIN KRAFTFAHRZEUG MIT EINER OPTISCHEN VERLAGERUNG EINES BEDIENSYMBOLS**
INPUT DEVICE AND METHOD FOR CONTROLLING AT LEAST ONE FUNCTIONAL UNIT FOR A VEHICLE WITH A VISUAL DISPLACEMENT OF AN OPERATION ICON
DISPOSITIF DE COMMANDE ET PROCEDE DE CONTROLE D'AU MOINS UNE UNITE FONCTIONELLE POUR UN VEHICULE AVEC UN DEPLACEMENT VISUEL D'UN SYMBOLE DE COMMANDE

(30) Priorität: 22.02.2018 DE 102018202668
(43) Veröffentlichungstag der Anmeldung: 30.12.2020
(73) Patentinhaber: Audi AG, 85045 Ingolstadt (DE)
(72) Erfinder: MÜLLER, Ulrich, 85055 Ingolstadt (DE); STÜTZEL, Michael, 85301 Schweitenkirchen (DE); LOTTES, Daniel, 93346 Ihrlerstein (DE)
(86) Internationale Anmeldenummer: PCT/EP2019/052460
(87) Internationale Veröffentlichungsnummer: WO 2019/162059

(56) Entgegenhaltungen:
- EP-B1- 2 024 198
- DE-A1-102012 014 255
- US-A1- 2012 019 463

## Beschreibung

Die Erfindung betrifft eine Bedienvorrichtung zum Ansteuern zumindest einer Funktionseinheit für ein Kraftfahrzeug. Die Bedienvorrichtung weist eine erste Anzeigeeinrichtung auf, welche berührungssensitiv und zumindest teiltransparent ausgebildet ist. Ferner weist die Bedienvorrichtung eine zur ersten Anzeigeeinrichtung separate zweite Anzeigeeinrichtung auf, wobei die erste Anzeigeeinrichtung und die zweite Anzeigeeinrichtung einander überlappend angeordnet sind. Die Bedienvorrichtung ist dazu ausgebildet, zumindest ein Bedienfeld als optisches Bediensymbol auf der ersten Anzeigeeinrichtung anzuzeigen. Bei einem Berühren des Bedienfelds durch einen Nutzer der Bedienvorrichtung ist die Funktionseinheit angesteuert. Ferner betrifft die Erfindung ein Verfahren zum Bedienen einer Bedienvorrichtung.

Aus dem Stand der Technik ist bereits bekannt, dass beispielsweise, um 3D-Inhalte darzustellen, zwei Anzeigeeinrichtungen, welche insbesondere als Display (Bildschirm) bezeichnet werden, mit jeweiligen bildgebenden Ebenen hintereinander überlappend anzuordnen. Dazu befindet sich ein halbtransparentes Display vor einem weiteren Display, wobei dadurch ein räumlicher Effekt entsteht. Ebenfalls aus dem Stand der Technik bereits bekannt sind Touch-Screens (Berührungsbildschirme) mit Krafterkennung und einer haptischen Rückmeldung. Dies bedeutet, dass eine berührte Funktion auf dem Touch-Screen erst beim Drücken mit einer vorbestimmten Kraft ausgelöst wird. Gleichzeitig wird eine Haptik, beispielsweise eine mechanische Vibration, und/oder ein akustischer "Klick" erzeugt. Nachteilig aus dem Stand der Technik ist, dass ein Nutzer optisch nicht erkennen kann, ob die Funktion bei der Berührung des Bildsymbols oder erst bei einer entsprechenden Bedienkraft ausgelöst wurde.

Ferner offenbart die DE 10 2015 016 499 B3 eine Bedienvorrichtung für ein Kraftfahrzeug mit einem Berührungsbildschirm zum Anzeigen von grafischen Objekten auf einer Anzeigeoberfläche und zum Erfassen von Berührkoordinaten einer durch einen Benutzer an der Anzeigefläche getätigten Bildschirmberührung. Die Bedienvorrichtung weist eine Verschwenkeinrichtung zum Halten des Berührungsbildschirms an einem Verkleidungsteil des Kraftfahrzeugs und zum Verschwenken des Berührungsbildschirms bezüglich des Verkleidungsteils auf. Für die Verschwenkeinrichtung ist eine Aktoreinheit bereitgestellt, welche dazu eingerichtet ist, in Abhängigkeit von einem vorbestimmten Aktivierungssignal die Verschwenkeinrichtung mechanisch zu erschüttern und hierdurch an der Anzeigefläche eine Rückmeldung für den Benutzer zu erzeugen.

Ferner offenbart die DE 10 2008 037 978 A1 ein Verfahren zum Anzeigen von Informationen in einem Fahrzeug. Es werden von einer Anzeigevorrichtung Informationen angezeigt und die angezeigten Informationen werden dadurch verändert, dass ein Nutzer eine Eingabevorrichtung betätigt. Es ist vorgesehen, dass die bei der Betätigung vom Nutzer auf die Eingabevorrichtung ausgebildete Kraft detektiert wird, und dass die Geschwindigkeit, mit der sich die angezeigte Information ändert, von der ausgeübten Kraft abhängt.

Ferner offenbart die US 2012 019 463 A1 eine Eingabevorrichtung, insbesondere für ein Fahrzeug, umfassend ein erstes Display zur optischen Anzeige von Informationen, mindestens ein oberhalb des ersten Displays angeordnetes zweites Display zur optischen Anzeige von Informationen und einen oberhalb des zweiten Displays angeordneten Touchscreen zur Eingabe von Befehlen durch Berühren einer Bedienfläche des Touchscreens.

Aufgabe der vorliegenden Erfindung ist es, eine Bedienvorrichtung sowie ein Verfahren zu schaffen, mittels welcher beziehungsweise mittels welchem zuverlässig ein Bedienstatus der Bedienvorrichtung für den Nutzer angezeigt werden kann.

Diese Aufgabe wird durch eine Bedienvorrichtung sowie durch ein Verfahren gemäß den unabhängigen Patentansprüchen gelöst. Vorteilhafte Ausgestaltungsformen sind in den Unteransprüchen angegeben.

Ein Aspekt der Erfindung betrifft eine Bedienvorrichtung zum Ansteuern zumindest einer Funktionseinheit für ein Kraftfahrzeug. Die Bedienvorrichtung weist eine erste Anzeigeeinrichtung auf, welche berührungssensitiv und zumindest teiltransparent ausgebildet ist. Ferner weist die Bedienvorrichtung eine zur ersten Anzeigeeinrichtung separate zweite Anzeigeeinrichtung auf, wobei die erste Anzeigeeinrichtung und die zweite Anzeigeeinrichtung einander überlappend angeordnet sind. Die Bedienvorrichtung ist dazu ausgebildet, zumindest ein Bedienfeld als optisches Bediensymbol auf der ersten Anzeigeeinrichtung anzuzeigen und bei einem Berühren des Bedienfelds durch einen Nutzer der Bedienvorrichtung die Funktionseinheit anzusteuern.

Zur Lösung der obigen Aufgabe ist vorgesehen, dass die Bedienvorrichtung dazu ausgebildet ist, bei dem Berühren des Bedienfelds auf der ersten Anzeigeeinrichtung durch den Nutzer zumindest bereichsweise eine optische Verlagerung des optischen Bediensymbols von der ersten Anzeigeeinrichtung zu der zweiten Anzeigeeinrichtung durch zumindest bereichsweises Anzeigen des optischen Bediensymbols auf der zweiten Anzeigeeinrichtung durchzuführen.

Somit kann beim Drücken des Bedienfelds der berührungssensitiven Anzeigeeinrichtung die Bedienung in Form einer Animation in die optische Tiefe visualisiert werden. Mit anderen Worten kann beim Betätigen mit einer Bedienkraft die Ansteuerung der Funktionseinheit ausgelöst werden und das Bediensymbol kann beispielsweise von der ersten Anzeigeeinrichtung auf die zweite Anzeigeeinrichtung verlagert werden. Dadurch kann beispielsweise die Analogie des Drückens einer mechanischen Taste dargestellt werden, welche sich nach unten bewegt. Beispielsweise kann die Verlagerung in Form einer auf der ersten Anzeigeeinrichtung verblassenden und auf der zweiten Anzeigeeinrichtung stärker werdenden Grafik symbolisiert werden. Es sind auch weitere grafische Übergangsformen ermöglicht. Dadurch kann dem Nutzer visualisiert werden, dass er eine Betätigung der Funktionseinheit ausgelöst hat, indem er die Betätigungseinrichtung berührt beziehungsweise drückt und die Funktionseinheit durch das Berühren ansteuert. Dadurch kann zuverlässig für den Nutzer eine Rückmeldung des Bedienstatus der Funktionseinheit beziehungsweise der Bedienvorrichtung gegeben werden. Somit lässt sich zuverlässig eine Bedienung der Funktionseinheit visualisieren.

Bevorzugt ist vorgesehen, dass das Bedienfeld durch Hinterleuchtung des Bedienfelds sichtbar ist. Insbesondere ist die Anzeige des Bediensymbols blickwinkelunabhängig, sodass aus unterschiedlichen Blickwinkeln das Bediensymbol nahezu unverändert angezeigt wird. Neben einem Verblassen des Bediensymbols während der optischen Verlagerung kann auch ein farblicher Effekt, beispielsweise durch eine farbliche Veränderung des Bediensymbols auf der ersten Anzeigeeinrichtung und auf der zweiten Anzeigeeinrichtung, durchgeführt werden.

Als Funktionseinheit des Kraftfahrzeugs können beispielsweise ein Info-/Entertainmentsystem, eine Klimatisierungseinrichtung des Kraftfahrzeugs, ein Assistenzsystem des Kraftfahrzeugs und/oder weitere Systeme des Kraftfahrzeugs, beispielsweise ein Lichtsystem des Kraftfahrzeugs, zur Unterstützung des Fahrers angesehen werden.

Insbesondere kann die berührungssensitive Anzeigeeinrichtung auch als kraftsensitive Anzeigeeinrichtung bezeichnet werden.

Bevorzugt ist die erste Anzeigeeinrichtung als ein sogenannter Touch-Screen (Berührungsbildschirm) ausgebildet. Insbesondere ist mittels des Touchscreens die Position des Fingers bekannt. Eine entsprechende Berührungserkennung kann beispielsweise durch eine Abstandsmessung von der ersten Anzeigeeinrichtung zur zweiten Anzeigeeinrichtung ermöglicht sein.

Gemäß einer vorteilhaften Ausgestaltungsform kann zur optischen Verlagerung eine Überlagerung, insbesondere ein Überblenden, des optischen Bediensymbols von der ersten Anzeigeeinrichtung zu der zweiten Anzeigeeinrichtung erfolgen. Mit anderen Worten kann insbesondere ein Verblassen des optischen Bediensymbols auf der ersten Anzeigeeinrichtung für die optische Verlagerung durchgeführt werden, während auf der zweiten Anzeigeeinrichtung das Bildsymbol optisch stärker dargestellt werden kann. Insbesondere wird das Bildsymbol der zweiten Anzeigeeinrichtung direkt hinter dem Bediensymbol auf der ersten Anzeigeeinrichtung dargestellt. Insbesondere kann beispielsweise eine zeitliche optische Verlagerung durchgeführt werden. Beispielsweise kann bei Berührung des Bedienfelds die optische Verlagerung der ersten Anzeigeeinrichtung über einen vorgegebenen Zeitraum auf die zweite Anzeigeeinrichtung durch Verblassen des Bediensymbols erfolgen. Somit kann dem Bediener eine visuelle Rückmeldung über den jeweiligen Bedienstatus der Bedienvorrichtung und/oder der Funktionseinheit gegeben werden.

Es hat sich weiterhin als vorteilhaft erwiesen, wenn bei Berührung des Bedienfelds die Anzeige des Bediensymbols auf der ersten Anzeigeeinrichtung erlischt und die zweite Anzeigeeinrichtung das Bediensymbol anzeigt. Mit anderen Worten springt bei Berührung des Bedienfelds optisch das Bediensymbol von der ersten Anzeigeeinrichtung auf die zweite Anzeigeeinrichtung. Bei Berührung ist somit auf der ersten Anzeigeeinrichtung kein Bediensymbol mehr angezeigt und die erste Anzeigeeinrichtung ist bediensymbollos. Bei der Berührung zeigt die zweite Anzeigeeinrichtung das Bediensymbol an. Damit kann ein Tiefeneffekt erzeugt werden, sodass dem Nutzer der Bedienstatus der Bedienvorrichtung zuverlässig angezeigt ist. Des Weiteren kann insbesondere vorgesehen sein, dass bei einem Ende der Berührung durch den Nutzer das Bediensymbol wieder von der zweiten Anzeigeeinrichtung auf die erste Anzeigeeinrichtung springt. Mit anderen Worten erlischt bei der Nichtberührung des Bedienfelds das Bediensymbol auf der zweiten Anzeigeeinrichtung und wird auf der ersten Anzeigeeinrichtung wiederum angezeigt.

In einer weiteren vorteilhaften Ausgestaltungsform erfolgen die optische Verlagerung und/oder das Betätigen der Funktionseinheit bei einem Überschreiten eines Berührungskraftschwellwerts durch eine auf das Bedienfeld ausgeübte Kraft. Insbesondere kann hierzu der Berührungskraftschwellwert vorgegeben, beispielsweise in einem Look-up Table (Umsetzungstabelle) auf einem Speichermedium der Bedienvorrichtung abgespeichert, sein. Erst wenn der Nutzer eine Kraft ausübt, welche über dem Berührungskraftschwellwert liegt, werden die optische Verlagerung und/oder das Ansteuern der Funktionseinheit durchgeführt. Dadurch kann zuverlässig eine Fehlbedienung verhindert werden, da erst eine vorbestimmte Kraft aufgebracht werden muss, um zu einer optischen Verlagerung und/oder zu einer Ansteuerung der Funktionseinheit zu gelangen.

Ebenfalls vorteilhaft ist, wenn abhängig von einer ausgeübten Kraft des Nutzers auf das Bedienfeld die optische Verlagerung als fließend optische Verlagerung erfolgt. Insbesondere kann diese fließend optische Verlagerung beispielsweise durch eine Verblassung des Bediensymbols auf der ersten Anzeigeeinrichtung und durch eine Verstärkung des angezeigten Bediensymbols auf der zweiten Anzeigeeinrichtung durchgeführt werden. Dadurch kann eine Animation in die Tiefe visualisiert werden, ohne dass sich der Abstand der beiden Anzeigeeinrichtungen physisch zueinander ändert. Dadurch kann eine zuverlässige Analogie des Drückens einer mechanischen Taste dargestellt werden, welche sich optisch nach unten/hinten bewegt. Diese optische fließende Verlagerung suggeriert dem Nutzer das Betätigen der Bedienvorrichtung und somit erhält der Nutzer eine zuverlässige visuelle Rückmeldung über die entsprechende Ansteuerung der Funktionseinheit.

Ferner hat es sich als vorteilhaft erwiesen, wenn eine erste optische Verlagerung und/oder das Betätigen einer ersten Funktionseinheit bei einem Überschreiten eines ersten Berührungskraftschwellwerts einer auf das Bedienfeld ausgeübten Kraft erfolgt und/oder zumindest eine zweite optische Verlagerung und/oder das Ansteuern zumindest einer zweiten Funktionseinheit bei einem Überschreiten zumindest eines zweiten Berührungskraftschwellwerts durch ein auf das Bedienfeld zweite ausgeübte Kraft erfolgt. Mit anderen Worten weist die Bedienvorrichtung zwei Berührungskraftschwellwerte auf. Bei dem Überschreiten des ersten Berührungskraftschwellwerts kann dann entweder eine erste optische Verlagerung und/oder eine erste Ansteuerung einer ersten Funktionseinheit durchgeführt werden. Beispielsweise kann die erste optische Verlagerung ein Verblassen des Bediensymbols auf der ersten Anzeigeeinrichtung und ein Verstärken der Anzeige des Bediensymbols auf der zweiten Anzeigevorrichtung sein. Ferner kann dann bei Überschreiten des ersten Kraftschwellwerts eine erste Funktionseinheit, beispielsweise ein Radio des Kraftfahrzeugs, angesteuert werden. Der erste Berührungskraftschwellwert kann beispielsweise geringer sein als der zweite Berührungskraftschwellwert. Sollte der Nutzer im vorliegenden Beispiel mit einer größeren Kraft auf das Bedienfeld drücken, so kann dieser beim Überschreiten des zweiten Berührungskraftschwellwerts eine zweite optische Verlagerung auslösen, beispielsweise eine farbliche Veränderung des Bediensymbols auf der ersten Anzeigeeinrichtung und eine weitere farbliche Veränderung auf der zweiten Anzeigeeinrichtung. Ferner kann durch das Ausüben der zweiten Kraft eine zweite Funktionseinheit des Kraftfahrzeugs, beispielsweise eine Klimaeinrichtung des Kraftfahrzeugs, angesteuert werden. Ebenfalls möglich ist, dass mehr als zwei Berührungskraftschwellwerte für die Bedienvorrichtung ausgebildet sind, sodass mehr als zwei optische Verlagerungen und/oder mehr als zwei Funktionseinheiten des Kraftfahrzeugs mit der Bedienvorrichtung angesteuert werden können. Somit kann mit einer Bedienvorrichtung dem Nutzer die Betätigung beziehungsweise die Ansteuerung von einer Vielzahl von Funktionseinheiten, insbesondere bedeutet Vielzahl hier mehr als eine Funktionseinheit, rückgemeldet werden, sodass der Nutzer zuverlässig den Bedienstatus wahrnehmen kann.

In einer weiteren vorteilhaften Ausgestaltungsform kann die Bedienvorrichtung dazu ausgebildet sein, mittels einer ersten optischen Veränderung des Bediensymbols die erste optische Verlagerung anzuzeigen und/oder mittels einer zur ersten optischen Veränderung unterschiedlichen, insbesondere komplementären, zweiten optischen Veränderung des Bediensymbols die zweite optische Verlagerung anzuzeigen. Insbesondere kann somit zuverlässig dem Nutzer angezeigt werden, welche Bedienung er gerade durchführt. Somit kann zuverlässig dem Nutzer eine Rückmeldung über den Bedienstatus der jeweiligen Funktionseinheit gegeben werden. Dadurch kann eine zuverlässige Bedienung der Bedienvorrichtung und/oder der Funktionseinheit realisiert werden.

Gemäß einer weiteren vorteilhaften Ausgestaltungsform kann die Bedienvorrichtung dazu ausgebildet sein, abhängig von einer ausgeübten Kraft des Nutzers auf das Bedienfeld als Liste und/oder als Menü von Funktionen oder Funktionswerten der Funktionseinheit eine Bildlaufgeschwindigkeit des Bedienfelds zu verändern. Beispielsweise kann dadurch eine kontinuierliche, kraftabhängige Verstellung zum Beispiel der Temperatur und/oder einer anderen Funktion realisiert werden. Des Weiteren kann mittels der Bildlaufgeschwindigkeit, welche auch als Scrollen bezeichnet wird, ein "Hindurchscrollen" durch eine entsprechende Funktionsliste ermöglicht werden. Beispielsweise kann dann mittels eines leichten Drucks die Liste langsam durchlaufen werden, während mittels eines stärkeren Drucks die Liste schneller durchlaufen beziehungsweise durchscrollt wird. Somit kann für den Nutzer eine zuverlässige und komfortable Bedienvorrichtung bereitgestellt werden, mittels welcher er mehrere Funktionen der Funktionseinheit auf einfache Art und Weise durchlaufen kann.

Es hat sich weiterhin als vorteilhaft erwiesen, wenn die Bedienvorrichtung zum Erzeugen einer haptischen Rückmeldung zum haptischen Wahrnehmen für den Nutzer bei einer Ansteuerung der Funktionseinheit ausgebildet ist und/oder die Bedienvorrichtung zum Erzeugen einer akustischen Rückmeldung zum akustischen Wahrnehmen für den Nutzer bei einer Ansteuerung der Funktionseinheit ausgebildet ist. Somit kann dem Nutzer zusätzlich eine Rückmeldung gegeben werden, ob die entsprechende Funktionseinheit betätigt wurde. Insbesondere sollte die Bedienvorrichtung über einen Berührungskraftschwellwert verfügen, kann somit dem Bediener angezeigt werden, dass dieser gerade den Berührungskraftschwellwert überschritten hat und es zum Ansteuern der entsprechenden Funktionseinheit kam. Die haptische Rückmeldung kann beispielsweise mittels einer Vibration durchgeführt werden und die akustische Rückmeldung beispielsweise mittels eines Pieptons und/oder eines Klicktons. Insbesondere kann ebenfalls vorgesehen sein, dass für das Ansteuern einer Vielzahl von Funktionseinheiten jeweils unterschiedliche haptische Rückmeldungen erzeugt werden beziehungsweise jeweils unterschiedliche akustische Rückmeldungen erzeugt werden. Die haptischen Rückmeldungen können sich dann sowohl in der Stärke als auch in der Frequenz der Vibration unterscheiden und die akustischen Rückmeldungen können sich in einer Tonhöhe und/oder in einer Tonfolge unterscheiden. Dadurch kann dem Nutzer eine zuverlässige Bedienvorrichtung bereitgestellt werden, mittels welcher er den Bedienstatus der Funktionseinheit mitgeteilt bekommt.

Ein weiterer Aspekt der Erfindung betrifft ein Verfahren zum Bedienen einer Bedienvorrichtung zum Ansteuern zumindest einer Funktionseinheit für ein Kraftfahrzeug. Die Bedienvorrichtung weist eine erste Anzeigeeinrichtung auf, welche berührungssensitiv und zumindest teiltransparent bereitgestellt wird. Ferner weist die Bedienvorrichtung eine zur ersten Anzeigeeinrichtung separate zweite Anzeigeeinrichtung auf, wobei die erste Anzeigeeinrichtung und die zweite Anzeigeeinrichtung einander überlappend angeordnet werden. Es wird zumindest ein Bedienfeld als optisches Bediensymbol auf der ersten Anzeigeeinrichtung angezeigt. Die Funktionseinheit wird bei einem Berühren des Bedienfelds durch einen Nutzer der Bedienvorrichtung angesteuert.

Es ist vorgesehen, dass bei dem Berühren des Bedienfelds auf der ersten Anzeigeeinrichtung durch den Nutzer zumindest bereichsweise das optische Bediensymbol von der ersten Anzeigeeinrichtung zu der zweiten Anzeigeeinrichtung optisch verlagert wird. Dazu wird zumindest bereichsweise das optische Bediensymbol auf der zweiten Anzeigeeinrichtung angezeigt.

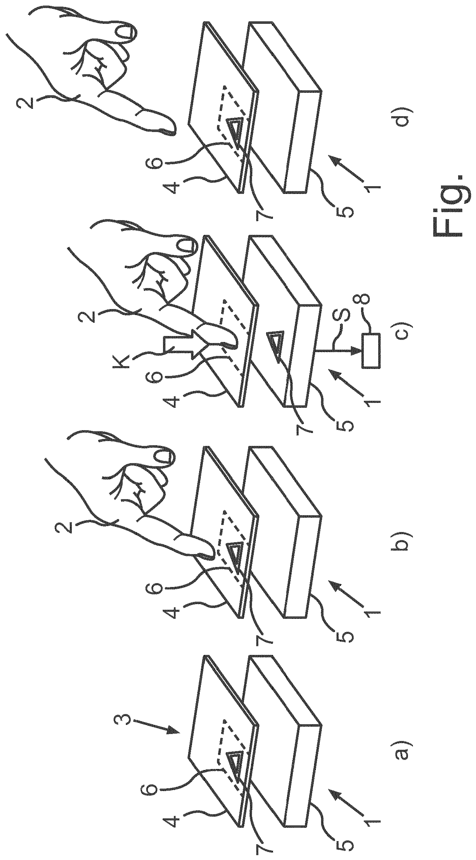

Im Folgenden sind Ausführungsbeispiele der Erfindung beschrieben. Hierzu zeigt die einzige Fig. eine schematische Perspektivansicht einer Ausführungsform einer Bedienvorrichtung.

In der Figur sind funktionsgleiche Elemente jeweils mit denselben Bezugszeichen versehen.

Die Figur zeigt in einer schematischen Perspektivansicht eine Bedienvorrichtung 1 in mehreren Bedienstadien der Bedienvorrichtung 1. Vorliegend sind vier Bedienstadien der Bedienvorrichtung 1 gezeigt. Die Bedienvorrichtung 1 kann insbesondere vor einem Nutzer 2 in einem nicht dargestellten Kraftfahrzeug angeordnet sein. Insbesondere ist die Bedienvorrichtung 1 derart angeordnet, dass der Nutzer 2 in Bedienrichtung 3 auf die Bedienvorrichtung 1 blickt.

Die Bedienvorrichtung 1 weist eine erste Anzeigeeinrichtung 4 und eine zur ersten Anzeigeeinrichtung 4 separate zweite Anzeigeeinrichtung 5 auf. Die erste Anzeigeeinrichtung 4 ist berührungssensitiv und zumindest teiltransparent ausgebildet. Insbesondere ist die erste Anzeigeeinrichtung 4 als ein Touch-Screen (Berühr-Bildschirm) ausgebildet. Des Weiteren kann mittels der ersten Anzeigeeinrichtung 4 eine Kraft K erfasst werden. Die erste Anzeigeeinrichtung 4 und die zweite Anzeigeeinrichtung 5 sind überlappend angeordnet. Mit anderen Worten kann über die teiltransparente erste Anzeigeeinrichtung 4 auf die zweite Anzeigeeinrichtung 5 geblickt werden.

Auf der ersten Anzeigeeinrichtung 4 ist ein Bedienfeld 6 ausgebildet. Das Bedienfeld 6 ist als optisches Bediensymbol 7 auf der ersten Anzeigeeinrichtung 4 im ersten Bedienstatus, welcher durch den Figurenteil a) dargestellt ist, angezeigt. Im folgenden Ausführungsbeispiel ist das Bediensymbol 7 als Dreieck, beispielsweise als Warndreieck, ausgebildet. Durch Berühren des Bedienfelds 6 durch den Nutzer 2 wird eine Funktionseinheit 8 des Kraftfahrzeugs angesteuert.

Bei der Funktionseinheit 8 des Kraftfahrzeugs kann es sich beispielsweise um ein Info-/Entertainmentsystem und/oder ein Assistenzsystem handeln. Mit anderen Worten wird durch Betätigen der Bedienvorrichtung 1 ein Ansteuersignal für die Funktionseinheit 8 erzeugt, sodass die Funktionseinheit 8 bei Berührung angesteuert beziehungsweise betätigt wird.

Es ist vorgesehen, dass die Bedienvorrichtung 1 dazu ausgebildet ist, bei dem Berühren des Bedienfelds 6 auf der ersten Anzeigeeinrichtung 4 durch den Nutzer 2 zumindest bereichsweise eine optische Verlagerung des optischen Bediensymbols 7 von der ersten Anzeigeeinrichtung 4 zu der zweiten Anzeigeeinrichtung 5 durch zumindest bereichsweises Anzeigen des optischen Bediensymbols 7 auf der zweiten Anzeigeeinrichtung 5 durchzuführen. Dieses Verfahren ist durch die Figurenteile a) bis c) der Figur dargestellt. Im Figurenteil a) der Figur befindet sich die Bedienvorrichtung 1 in einem unbetätigten Zustand. Im Figurenteil b) der Figur hat der Nutzer 2 das Bedienfeld 6 noch nicht berührt. Das Bediensymbol 7 ist weiterhin auf der ersten Anzeigeeinrichtung 4 angezeigt. Im Figurenteil c) der Figur hat der Nutzer 2 eine Kraft K auf das Bedienfeld 6 ausgeübt und das optische Bediensymbol 7 ist zumindest bereichsweise auf der zweiten Anzeigeeinrichtung 5 angezeigt. Im vorliegenden Ausführungsbeispiel ist das optische Bediensymbol 7 ganzheitlich auf der zweiten Anzeigeeinrichtung 5 angezeigt. Es erfolgt ein Steuersignal S für das Ansteuern der Funktionseinheit 8. In Figurenteil d) der Figur hat der Nutzer 2 die Berührung beendet und das optische Bediensymbol 7 ist wieder auf der ersten Anzeigeeinrichtung 4 angezeigt.

Insbesondere kann vorgesehen sein, dass zur optischen Verlagerung eine Überlagerung, insbesondere eine Überblendung, des optischen Bediensymbols 7 von der ersten Anzeigeeinrichtung 4 zu der zweiten Anzeigeeinrichtung 5 erfolgt. Insbesondere kann beispielsweise eine zeitliche Überlagerung durchgeführt werden. Mit anderen Worten wird bei dem Berühren des Bedienfelds 6 beispielsweise das optische Bediensymbol 7 auf der ersten Anzeigeeinrichtung 4 verblassen und auf der zweiten Anzeigeeinrichtung 5 verstärkt angezeigt werden. Insbesondere erfolgt dies über einen vorbestimmten Zeitraum. Dadurch kann insbesondere ein Tiefeneffekt erzeugt werden, wodurch dem Nutzer 2 der Bedienstatus der Bedienvorrichtung 1 beziehungsweise der Funktionseinheit 8 optisch angezeigt werden kann.

Ferner kann vorgesehen sein, dass bei Berührung des Bedienfelds 6 die Anzeige des optischen Bediensymbols 7 auf der ersten Anzeigeeinrichtung 4 erlischt und die zweite Anzeigeeinrichtung 5 das Bediensymbol 7 anzeigt. Dies ist insbesondere im Figurenteil c) der Figur dargestellt. Mit anderen Worten springt bei Berührung des Bedienfelds 6 das Bediensymbol 7 von der ersten Anzeigeeinrichtung 4 zur zweiten Anzeigeeinrichtung 5. Auf der ersten Anzeigeeinrichtung 4 ist somit kein optisches Bediensymbol 7 mehr angezeigt und auf der zweiten Anzeigeeinrichtung 5 ist dann das optische Bediensymbol 7 angezeigt.

Ferner kann insbesondere vorgesehen sein, dass die optische Verlagerung und/oder das Ansteuern der Funktionseinheit 8 bei einem Überschreiten eines Berührungskraftschwellwerts durch die auf das Bedienfeld 6 ausgeübte Kraft K erfolgt. Mit anderen Worten wird eine Ansteuerung der Funktionseinheit 8 und/oder die optische Verlagerung des optischen Bediensymbols 7 erst dann durchgeführt, wenn die Kraft K, welche durch den Nutzer 2 auf das Bedienfeld 6 ausgeübt wird, einen vorbestimmten Berührungskraftschwellwert überschreitet. Insbesondere ist es dadurch ermöglicht, dass eine Fehlbedienung der Bedienvorrichtung 1 verhindert werden kann.

Es kann ebenfalls vorgesehen sein, dass eine erste optische Verlagerung und/oder das Ansteuern einer ersten Funktionseinheit 8 bei einem Überschreiten eines ersten Berührungskraftschwellwerts einer auf das Bedienfeld 6 ausgeübten Kraft K erfolgt und/oder zumindest eine zweite optische Verlagerung und/oder das Ansteuern zumindest einer zweiten Funktionseinheit 8 bei einem Überschreiten zumindest eines zweiten Berührungskraftschwellwerts durch eine auf das Bedienfeld 6 zweite ausgeübte Kraft K erfolgt. Mit anderen Worten können mittels der Bedienvorrichtung 1 zumindest zwei Funktionseinheiten 8 angesteuert werden. Insbesondere kann dann beim Überschreiten des ersten Berührungskraftschwellwerts die erste Funktionseinheit 8 angesteuert werden und beim Überschreiten des Berührungskraftschwellwerts durch die Kraft K die zweite Funktionseinheit 8 angesteuert werden. Die zwei Funktionseinheiten 8 können insbesondere unterschiedlich ausgebildete Funktionseinheiten 8 sein. Beispielsweise kann die erste Funktionseinheit 8 als Info-/Entertainmentsystem ausgebildet und die zweite Funktionseinheit als Klimaautomatik. Alternativ oder zusätzlich kann dazu dann eine erste optische Verlagerung und/oder eine zweite optische Verlagerung abhängig von dem Überschreiten des Berührungskraftschwellwerts durchgeführt werden. Beispielsweise kann als erste optische Verlagerung ein Verblassen des optischen Bediensymbols 7 auf der ersten Anzeigeeinrichtung 4, während auf der zweiten Anzeigeeinrichtung 5 das optische Bediensymbol 7 stärker angezeigt wird, durchgeführt werden. Ebenfalls ist eine farbliche Veränderung beispielsweise als optische Verlagerung möglich.

Ferner kann vorgesehen sein, dass abhängig von der ausgeübten Kraft K des Nutzers 2 auf das Bedienfeld 6 die optische Verlagerung als fließend optische Verlagerung erfolgt. Somit kann eine Animation geschaffen werden, bei welcher die Analogie des Drückens einer mechanischen Taste dargestellt wird. Die Kraft K kann dann in Form des auf der ersten Anzeigeeinrichtung 4 verblassenden und auf der zweiten Anzeigeeinrichtung 5 stärker werden optischen Bildsymbols 7 symbolisiert werden.

Insbesondere kann vorgesehen sein, dass die Bedienvorrichtung 1 dazu ausgebildet ist, mittels einer ersten optischen Veränderung des optischen Bediensymbols 7 die erste optische Verlagerung anzuzeigen und/oder mittels einer zur ersten optischen Veränderung unterschiedlichen, insbesondere komplementären, zweiten optischen Veränderung des optischen Bediensymbols 7 die zweite optische Verlagerung anzuzeigen.

Ferner kann vorgesehen sein, dass die Bedienvorrichtung 1 dazu ausgebildet ist, abhängig von der ausgeübten Kraft K des Nutzers 2 auf das Bedienfeld 6 als Liste und/oder als Menü von Funktionen der Funktionseinheit 8 eine Bildlaufgeschwindigkeit des Bedienfelds 6 zu verändern. Mit anderen Worten kann eine Liste beziehungsweise ein Menü mittels der Bedienvorrichtung 1 bedient insbesondere gescrollt werden. Abhängig von der ausgeübten Kraft K kann dann beispielsweise die Bildlaufgeschwindigkeit verändert werden. Beispielsweise kann durch eine geringe Kraft K eine geringe Bildlaufgeschwindigkeit, mit anderen Worten ein langsames Scrollen, durchgeführt werden. Bei einer Erhöhung der Kraft K kann dann die Bildlaufgeschwindigkeit erhöht werden, insbesondere kann ein schnelleres Scrollen durchgeführt werden.

Ferner kann vorgesehen sein, dass die Bedienvorrichtung 1 zum Erzeugen einer haptischen Rückmeldung zum haptischen Wahrnehmen für den Nutzer 2 bei einer Ansteuerung der Funktionseinheit 8 ausgebildet ist und/oder die Bedienvorrichtung 1 zum Erzeugen einer akustischen Rückmeldung zum akustischen Wahrnehmen für den Nutzer 2 bei einer Ansteuerung der Funktionseinheit 8 ausgebildet ist. Mit anderen Worten kann neben der optischen Rückmeldung durch die Verlagerung des optischen Bediensymbols 7 auch eine haptische Rückmeldung, beispielsweise eine Vibration, erzeugt werden, sodass der Nutzer 2 über die Ansteuerung der Funktionseinheit 8 zusätzlich über die haptische Rückmeldung in Kenntnis gesetzt ist. Ferner kann neben der haptischen Wahrnehmung beispielsweise auch eine akustische Rückmeldung, beispielsweise durch einen Piepton, erzeugt werden, sodass der Nutzer 2 zusätzlich zu der optischen Verlagerung des optischen Bediensymbols 7 und/oder zu der haptischen Rückmeldung noch die akustische Rückmeldung erhält. Dadurch kann zuverlässig dem Nutzer 2 der Bedienstatus auf unterschiedliche Arten und Weisen, insbesondere optisch, haptisch und akustisch, angezeigt werden. Dadurch kann eine zuverlässige Betätigung der Funktionseinheit 8 für den Nutzer 2 angezeigt werden.

Beim Verfahren zum Bedienen der Bedienvorrichtung 1 zum Ansteuern zumindest der Funktionseinheit 8 für das Kraftfahrzeug wird mit der ersten Anzeigeeinrichtung 4 insbesondere durch Hinterleuchtung zumindest das auf dem Bedienfeld 6 als optisches Bediensymbol 7 angezeigte Bediensymbol angezeigt. Die erste Anzeigeeinrichtung 4 wird dabei berührungssensitiv und zumindest teiltransparent bereitgestellt. Die erste Anzeigeeinrichtung 4 wird einander überlappend mit der zweiten Anzeigeeinrichtung 5 angeordnet. Die Funktionseinheit 8 wird bei einem Berühren des Bedienfelds 6 durch den Nutzer 2 der Bedienvorrichtung 1 angesteuert. Es ist vorgesehen, dass bei dem Berühren des Bedienfelds 6 auf der ersten Anzeigeeinrichtung 4 durch den Nutzer 2 zumindest bereichsweise das optische Bediensymbol 7 von der ersten Anzeigeeinrichtung 4 zu der zweiten Anzeigeeinrichtung 5 optisch verlagert wird. Dazu wird zumindest bereichsweise das optische Bediensymbol 7 auf der zweiten Anzeigeeinrichtung 5 angezeigt.

Insgesamt zeigt das Beispiel eine Animation von Krafterkennung.

## Patentansprüche

1. Bedienvorrichtung (1) zum Ansteuern zumindest einer Funktionseinheit (8) für ein Kraftfahrzeug, mit einer ersten Anzeigeeinrichtung (4), welche berührungssensitiv und zumindest teiltransparent ausgebildet ist, und mit einer zur ersten Anzeigeeinrichtung (4) separaten zweiten Anzeigeeinrichtung (5), wobei die erste Anzeigeeinrichtung (4) und die zweite Anzeigeeinrichtung (5) einander überlappend angeordnet sind, wobei die Bedienvorrichtung (1) dazu ausgebildet ist, zumindest ein Bedienfeld (6) als optisches Bediensymbol (7) auf der ersten Anzeigeeinrichtung (4) anzuzeigen und bei einem Berühren des Bedienfelds (6) durch einen Nutzer (2) der Bedienvorrichtung (1) die Funktionseinheit (8) anzusteuern,
**dadurch gekennzeichnet, dass**
die Bedienvorrichtung (1) dazu ausgebildet ist, bei dem Berühren des Bedienfelds (6) auf der ersten Anzeigeeinrichtung (4) durch den Nutzer (2) zumindest bereichsweise eine optische Verlagerung des optischen Bediensymbols (7) von der ersten Anzeigeeinrichtung (4) zu der zweiten Anzeigeeinrichtung (5) durch zumindest bereichsweises Anzeigen des optischen Bediensymbols (7) auf der zweiten Anzeigeeinrichtung (5) durchzuführen.

2. Bedienvorrichtung (1) nach Anspruch 1, wobei zur optischen Verlagerung eine Überlagerung des optischen Bediensymbols (7) von der ersten Anzeigeeinrichtung (4) zu der zweiten Anzeigeeinrichtung (5) erfolgt.

3. Bedienvorrichtung (1) nach einem der vorhergehenden Ansprüche, wobei bei Berührung des Bedienfelds (6) die Anzeige des optischen Bediensymbols (7) auf der ersten Anzeigeeinrichtung (4) erlischt und die zweite Anzeigeeinrichtung (5) das optische Bediensymbol (7) anzeigt.

4. Bedienvorrichtung (1) nach einem der vorhergehenden Ansprüche, wobei die optische Verlagerung und/oder das Ansteuern der Funktionseinheit (8) bei einem Überschreiten eines Berührungskraftschwellwerts durch eine auf das Bedienfeld (6) ausgeübte Kraft (K) erfolgt.

5. Bedienvorrichtung (1) nach einem der Ansprüche 1 bis 3, wobei abhängig von einer ausgeübten Kraft (K) des Nutzers (2) auf das Bedienfeld (6) die optische Verlagerung als fließende optische Verlagerung erfolgt.

6. Bedienvorrichtung (1) nach einem der vorhergehenden Ansprüche, wobei eine erste optische Verlagerung und/oder das Ansteuern einer ersten Funktionseinheit (8) bei einem Überschreiten eines ersten Berührungskraftschwellwerts einer auf das Bedienfeld (6) ausgeübten Kraft (K) erfolgt und/oder zumindest eine zweite optische Verlagerung und/oder das Ansteuern zumindest einer zweiten Funktionseinheit (8) bei einem Überschreiten zumindest eines zweiten Berührungskraftschwellwerts durch eine auf das Bedienfeld (6) zweite ausgeübte Kraft (K) erfolgt.

7. Bedienvorrichtung (1) nach Anspruch 6, wobei die Bedienvorrichtung (1) dazu ausgebildet ist, mittels einer ersten optischen Veränderung des optischen Bediensymbols (7) die erste optische Verlagerung anzuzeigen und/oder mittels einer zur ersten optischen Veränderung unterschiedlichen, insbesondere komplementären, zweiten optischen Veränderung des optischen Bediensymbols (7) die zweite optische Verlagerung anzuzeigen.

8. Bedienvorrichtung (1) nach einem der vorhergehenden Ansprüche, wobei die Bedienvorrichtung (1) dazu ausgebildet ist, abhängig von einer ausgeübten Kraft (K) des Nutzers (2) auf das Bedienfeld (6) als Liste und/oder als Menü von Funktionen oder Funktionswerten der Funktionseinheit (8) eine Bildlaufgeschwindigkeit des Bedienfelds (6) zu verändern.

9. Bedienvorrichtung (1) nach einem der vorhergehenden Ansprüche, wobei die Bedienvorrichtung (1) zum Erzeugen einer haptischen Rückmeldung zum haptischen Wahrnehmen für den Nutzer (2) bei einer Ansteuerung der Funktionseinheit (8) ausgebildet ist und/oder die Bedienvorrichtung (1) zum Erzeugen einer akustischen Rückmeldung zum akustischen Wahrnehmen für den Nutzer (2) bei einer Ansteuerung der Funktionseinheit (8) ausgebildet ist.

10. Verfahren zum Bedienen einer Bedienvorrichtung (1) zum Ansteuern zumindest einer Funktionseinheit (8) für ein Kraftfahrzeug, mit einer ersten Anzeigeeinrichtung (4), welche berührungssensitiv und zumindest teiltransparent bereitgestellt wird, und mit einer zur ersten Anzeigeeinrichtung (4) separaten zweiten Anzeigeeinrichtung (5), wobei die erste Anzeigeeinrichtung (4) und die zweite Anzeigeeinrichtung (5) einander überlappend angeordnet werden, wobei zumindest ein Bedienfeld (6) als optisches Bediensymbol (7) auf der ersten Anzeigeeinrichtung (4) angezeigt wird, und wobei die Funktionseinheit (8) bei einem Berühren des Bedienfelds (6) durch einen Nutzer (2) der Bedienvorrichtung (1) angesteuert wird,
**dadurch gekennzeichnet, dass**
bei dem Berühren des Bedienfelds (6) auf der ersten Anzeigeeinrichtung (4) durch den Nutzer (2) zumindest bereichsweise das optische Bediensymbol (7) von der ersten Anzeigeeinrichtung (4) zu der zweiten Anzeigeeinrichtung (5) optisch verlagert wird, wobei dazu zumindest bereichsweise das optische Bediensymbols (7) auf der zweiten Anzeigeeinrichtung (5) angezeigt wird.

## Claims

1. Control device (1) for actuating at least one functional unit (8) for a motor vehicle, with a first display device (4) which is configured to be touch-sensitive and at least partially transparent, and with a second display device (5) which is separate from the first display device (4), the first display device (4) and the second display device (5) being arranged so as to overlap one another, the control device (1) being configured to display at least one control field (6) as a visual control symbol (7) on the first display device (4) and to actuate the functional unit (8) when a user (2) of the control device (1) touches the control field (6),
**characterised in that**
the control device (1) is configured to carry out, when the user (2) touches the control field (6) on the first display device (4), a visual displacement of the visual control symbol (7) from the first display device (4) to the second display device (5) at least in certain areas by displaying the visual control symbol (7) at least in certain areas on the second display device (5).

2. Control device (1) according to claim 1, wherein for the visual displacement an overlay of the visual control symbol (7) from the first display device (4) to the second display device (5) occurs.

3. Control device (1) according to any one of the preceding claims, wherein, when the control field (6) is touched, the display of the visual control symbol (7) on the first display device (4) goes out and the second display device (5) displays the visual control symbol (7).

4. Control device (1) according to any one of the preceding claims, wherein the visual displacement and/or the actuation of the functional unit (8) occurs when a touch force threshold value is exceeded by a force (K) exerted on the control field (6).

5. Control device (1) according to any one of claims 1 to 3, wherein the visual displacement occurs as a flowing visual displacement depending on a force (K) exerted by the user (2) on the control field (6).

6. Control device (1) according to any one of the preceding claims, wherein a first visual displacement and/or the actuation of a first functional unit (8) occurs when a first touch force threshold value of a force (K) exerted on the control field (6) is exceeded and/or at least a second visual displacement and/or the actuation of at least a second functional unit (8) occurs when at least a second touch force threshold value is exceeded by a second force (K) exerted on the control field (6).

7. Control device (1) according to claim 6, wherein the control device (1) is configured to indicate the first visual displacement by means of a first visual change in the visual control symbol (7) and/or to indicate the second visual displacement by means of a second visual change in the visual control symbol (7) which is different, in particular complementary, to the first visual change.

8. Control device (1) according to any one of the preceding claims, wherein the control device (1) is configured to change a scrolling speed of the control field (6) depending on a force (K) exerted by the user (2) on the control field (6) as a list and/or as a menu of functions or functional values of the functional unit (8).

9. Control device (1) according to any one of the preceding claims, wherein the control device (1) is configured to generate a haptic feedback for haptic perception by the user (2) when the functional unit (8) is actuated and/or the control device (1) is configured to generate an acoustic feedback for acoustic perception by the user (2) when the functional unit (8) is actuated.

10. Method for operating a control device (1) for actuating at least one functional unit (8) for a motor vehicle, with a first display device (4) which is provided in a touch-sensitive and at least partially transparent manner, and with a second display device (5) which is separate from the first display device (4), the first display device (4) and the second display device (5) being arranged so as to overlap one another, at least one control field (6) being displayed as a visual control symbol (7) on the first display device (4), and the functional unit (8) being actuated when the control field (6) is touched by a user (2) of the control device (1),
**characterised in that**
when the user (2) touches the control field (6) on the first display device (4), the visual control symbol (7) is visually displaced at least in certain areas from the first display device (4) to the second display device (5), the visual control symbol (7) being displayed for this purpose at least in certain areas on the second display device (5).

## Revendications

1. Dispositif de commande (1) pour commander au moins une unité fonctionnelle (8) pour un véhicule automobile, avec un premier appareil d'affichage (4), lequel est réalisé de manière tactile et au moins partiellement transparente, et avec un second appareil d'affichage (5) séparé du premier appareil d'affichage (4), dans lequel le premier appareil d'affichage (4) et le second appareil d'affichage (5) sont disposés de manière à se chevaucher, dans lequel le dispositif de commande (1) est réalisé pour afficher au moins un panneau de commande (8) en tant que symbole de commande optique (7) sur le premier appareil d'affichage (4) et pour commander l'unité fonctionnelle (8) lorsqu'un utilisateur (2) du dispositif de commande (1) touche le panneau de commande (6)
**caractérisé en ce que**
le dispositif de commande (1) est réalisé pour mettre en oeuvre, lorsque l'utilisateur (2) touche le panneau de commande (6) sur le premier appareil d'affichage (4), un déplacement optique du symbole de commande optique (7) du premier appareil d'affichage (4) au second appareil d'affichage (5) en affichant au moins par zones le symbole de commande optique (7) sur le second appareil d'affichage (5).

2. Dispositif de commande (1) selon la revendication 1, dans lequel une superposition du symbole de commande optique (7) est effectuée du premier appareil d'affichage (4) au second appareil d'affichage (5) pour le décalage optique.

3. Dispositif de commande (1) selon l'une quelconque des revendications précédentes, dans lequel lorsque le panneau de commande (6) est touché, l'affichage du symbole de commande optique (7) sur le premier appareil d'affichage (4) s'éteint et le second appareil d'affichage (5) affiche le symbole de commande optique (7).

4. Dispositif de commande (1) selon l'une quelconque des revendications précédentes, dans lequel le déplacement optique et/ou la commande de l'unité fonctionnelle (8) est effectué(e) lorsqu'une valeur seuil de force tactile est dépassée par une force (K) exercée sur le panneau de commande (6).

5. Dispositif de commande (1) selon l'une quelconque des revendications 1 à 3, dans lequel le déplacement optique est effectué en tant que déplacement optique progressif en fonction d'une force (K) exercée de l'utilisateur (2) sur le panneau de commande (8).

6. Dispositif de commande (1) selon l'une quelconque des revendications précédentes, dans lequel un premier déplacement optique et/ou la commande d'une première unité fonctionnelle (8) est effectué(e) lorsqu'une première valeur seuil de force tactile d'une force (K) exercée sur le panneau de commande (6) est dépassée et/ou au moins un second déplacement optique et/ou la commande d'au moins une seconde unité fonctionnelle (8) est effectué(e) lorsqu'au moins une seconde valeur seuil de force tactile est dépassée par une seconde force (K) exercée sur le panneau de commande (6).

7. Dispositif de commande (1) selon la revendication 6, dans lequel le dispositif de commande (1) est réalisé pour afficher le premier déplacement optique au moyen d'une première modification optique du symbole de commande optique (7) et/ou pour afficher le second déplacement optique au moyen d'une seconde modification optique du symbole de commande optique (7) qui est différente, en particulier complémentaire, de la première modification optique.

8. Dispositif de commande (1) selon l'une quelconque des revendications précédentes, dans lequel le dispositif de commande (1) est réalisé pour modifier une vitesse de défilement du panneau de commande (8) en fonction d'une force (K) exercée par l'utilisateur (2) sur le panneau de commande (6) en tant que liste et/ou de menu de fonctions ou de valeurs de fonction de l'unité fonctionnelle (8).

9. Dispositif de commande (1) selon l'une quelconque des revendications précédentes, dans lequel le dispositif de commande (1) est réalisé pour générer un retour haptique pour une perception haptique par l'utilisateur (2) lorsque l'unité fonctionnelle (8) est commandée et/ou le dispositif de commande (1) est réalisé pour générer un retour acoustique pour une perception acoustique par l'utilisateur (2) lorsque l'unité fonctionnelle (8) est commandée.

10. Procédé de commande d'un dispositif de commande (1) pour commander au moins une unité fonctionnelle (8) d'un véhicule automobile, avec un premier appareil d'affichage (4), lequel est préparé de manière tactile et au moins partiellement transparente, et avec un second appareil d'affichage (5) séparé du premier appareil d'affichage (4), dans lequel le premier appareil d'affichage (4) et le second appareil d'affichage (5) sont disposés de manière à se chevaucher, dans lequel au moins un panneau de commande (6) est affiché en tant que symbole de commande optique (7) sur le premier appareil d'affichage (4) et dans lequel l'unité fonctionnelle (8) est commandée lorsqu'un utilisateur (2) du dispositif de commande (1) touche le panneau de commande (6),
**caractérisé en ce que**
lorsque l'utilisateur (2) touche le panneau de commande (6) sur le premier appareil d'affichage (4), le symbole de commande optique (7) est déplacé optiquement du premier appareil d'affichage (4) au second appareil d'affichage (5) au moins par zones, dans lequel le symbole de commande optique (7) est affiché sur le second appareil d'affichage (5) au moins par zones à cet effet.
